# EUROPÄISCHE PATENTANMELDUNG

(11) **EP 2 713 031 A1**
(43) Veröffentlichungstag der Anmeldung: **02.04.2014**
(21) Anmeldenummer: 13175831.0
(22) Anmeldetag: 10.07.2013
(51) Int. Cl.: F02D 41/04

(54) **Landwirtschaftliches Fahrzeug, insbesondere Traktor**

(30) Priorität: 29.09.2012 DE 102012109205
(71) Anmelder: CLAAS Tractor SAS, 78141 Velizy-Villacoublay (FR)
(72) Erfinder: Momal, Pascal, 78140 Velízy Villacoublay (FR); Hegon, Jeremy, 92350 Le Plessis Robinson (FR); Zunino, Christophe, 75009 Paris (FR)

(57) **Zusammenfassung**

Ein landwirtschaftliches Fahrzeug (1), insbesondere Traktor, mit einem Motor (2) und mit zumindest einer Fahrachse (3, 4), die mit dem Motor (2) in Antriebsverbindung bringbar ist, um einen Antriebsstrang (7) zu bilden, zeichnet aus durch eine Steuereinrichtung (8), die betreibbar ist, bei Überschreiten einer vorgebbaren Motordrehzahl (n_{z}) dem Antriebsstrang (7) zumindest eine Last (9) zuzuschalten, um auf den Antriebsstrang (7) eine Bremswirkung auszuüben.

## Beschreibung

Die Erfindung betrifft ein landwirtschaftliches Fahrzeug, insbesondere einen Traktor gemäß dem Oberbegriff des Patentanspruchs 1.

Landwirtschaftliche Fahrzeuge wie beispielsweise Traktoren sind mit einem Antriebsmotor ausgestattet, in der Regel in Form eines Verbrennungsmotors. Zur Umwandlung einer vom Motor bereitgestellten Leistung in Vortriebsleistung des Fahrzeugs gegenüber dem Boden dient ein Antriebsstrang, der als wesentliche Komponenten zumindest den Motor und eine mit dem Motor in Antriebsverbindung bringbare Fahrachse umfasst. Der Antriebsstrang weist auf für sich gesehen bekannte Weise zumeist weitere Komponenten wie unter anderem Kupplung, Getriebe, Differential, Übertragungs- und/oder Gelenkwellen etc. auf.

Beim Fahrbetrieb des Fahrzeugs - sei es über ein Feld oder eine Straße - besteht zwischen Motor und Fahrachse eine weitestgehend spielfreie Antriebsverbindung, um auf energieeffiziente Weise Drehmoment vom Motor auf die Fahrachse (insbesondere daran befestigte Antriebsräder) zu übertragen. Diese Antriebsverbindung kann auf verschiedene Weisen, beispielsweise durch Kupplungsbetätigung oder durch Schaltvorgänge getrennt und/oder in deren Wirksamkeit verändert werden.

Auf für sich gesehen bekannte Weise lässt sich eine bestehende Antriebsverbindung zwischen angetriebener Fahrachse und Motor auch dazu nutzen, das landwirtschaftliche Fahrzeug im Schubbetrieb, d.h. unter Nutzung der Bremswirkung des Motors zu bremsen, um so beispielsweise die Radbremsen zu schonen. Physikalisch betrachtet, wird bei Nutzung dieser sogenannten Motorbremse die Bewegungsenergie (kinetische Energie) des Fahrzeugs durch entgegenwirkende Reibungs- und Kompressionskräfte in Wärme oder andere Energieformen umgewandelt, wozu der innere Widerstand des antriebsverbundenen und daher zwangsweise mitlaufenden Motors genutzt wird. Die Kraftstoffzufuhr zum Motor wird zur Erzielung dieser Bremswirkung vermindert oder unterbrochen. Von hoher praktischer Bedeutung ist eine derartige zusätzliche Bremsfunktion bei (längerer) Abwärtsfahrt im Gefälle und/oder wenn mit dem Fahrzeug schwere Massen, z.B. gezogene oder geschobene Anbaugeräte, bewegt werden. Der alleinige Gebrauch der Radbremsen führt in diesen Fällen zu einem verlängerten Bremsweg. Zudem erhitzen sich insbesondere bei langer und starker Bremsbetätigung die Bremsen stark, was zu einem erhöhten Verschleiß und damit kürzerer Lebensdauer führt.

Für die genannten Einsatzfälle ist es bekannt, die natürliche Bremswirkung des Motors zu erhöhen, indem der Motor beispielsweise mit einer sogenannten Abgasstaubremse (auch: Motorstaubremse genannt) versehen ist, die sich vom Fahrer per Knopfdruck betätigen lässt. Bei einer Betätigung wird dabei eine Klappe im Auspuff geschlossen, wodurch sich ein erhöhter Staudruck der Abgase im Motor aufbaut. Der erhöhte Staudruck hat eine erhöhte Motorbremswirkung zur Folge.

Da die Fahrer landwirtschaftlicher Fahrzeuge während ihres Arbeitseinsatzes meist einer Vielzahl zu überwachender komplexer Vorgänge ausgesetzt sind, erweist es sich in der Praxis als schwierig, eine in der zuvor beschriebenen Weise vorgesehene zusätzliche Bremsleistung zeitgerecht zu nutzen.

Es ist daher eine Aufgabe der vorliegenden Erfindung, ein landwirtschaftliches Fahrzeug anzugeben, das eine für einen Fahrer des Fahrzeugs komfortabel abrufbare erhöhte Bremsleistung des Antriebsstrangs aufweist.

Die Aufgabe wird gelöst durch ein landwirtschaftliches Fahrzeug mit den Merkmalen des Anspruchs 1. Dieses zeichnet sich aus durch eine Steuereinrichtung, die betreibbar ist, bei Überschreiten einer vorgebbaren Motordrehzahl dem Antriebsstrang zumindest eine Last zuzuschalten, um auf den Antriebsstrang eine Bremswirkung auszuüben.

Erfindungsgemäß wurde dabei zunächst erkannt, dass es für den Fahrer eines landwirtschaftlichen Fahrzeugs während des Arbeitseinsatzes schwierig ist, eine wie auch immer geartete zusätzliche Bremseinrichtung manuell zu betätigen. Daraus wurde die Notwendigkeit eines selbsttätigen Auslösens einer solchen Bremswirkung abgeleitet. Erfindungsgemäß übernimmt diese Aufgabe eine Steuereinrichtung, welche bei Überschreiten einer vorgebbaren Motordrehzahl dem Antriebsstrang zumindest eine Last zuschalten kann, so dass der Antriebsstrang im Schubbetrieb des Fahrzeugs aufgrund der zugeschalteten Last - neben dem aus bloßer Minderung oder Unterbrechung der Kraftstoffzufuhr resultierenden Bremsmoment des Motors - mit einem zusätzlichen Bremsmoment beaufschlagt wird. Die Zuschaltung erfolgt dabei mittels der Steuereinrichtung selbsttätig, so dass der Fahrer des Fahrzeugs von der Betätigung entlastet ist und daneben sichergestellt ist, dass das Zuschalten in einer geeigneten Betriebssituation erfolgt. Erfindungsgemäß wurde erkannt, dass eine solche Betriebssituation bei Überschreiten einer bestimmten Motordrehzahl vorliegt. Diese Drehzahl kann beispielsweise für einen Motor fest vorgegeben sein und bevorzugt der Drehzahl entsprechen, bei welcher das Drehmoment des Motors im Fahrtbetrieb null erreicht. Alternativ könnte die Drehzahl vom Fahrer mittels einer Eingabeeinrichtung wählbar sein.

Aufgrund der drehzahlabhängig erhöhten Bremsleistung des Antriebsstrangs im Schubbetrieb können mit dem erfindungsgemäßen Fahrzeug vorteilhaft die Erhitzung sowie der Verschleiß sonstiger Bremseinrichtungen, insbesondere herkömmlicher Radbremsen zuverlässig gemindert werden. Die von herkömmlichen Bremseinrichtungen aufzubringende Bremsleistung lässt sich etwa in dem Maße reduzieren, wie die zumindest eine Last zugeschaltet wird. Eine erhöhte Lebensdauer der Bremseinrichtungen ist die Folge.

Zweckmäßigerweise ist der Steuereinrichtung ein Sensor zur Erfassung der Motordrehzahl zugeordnet. Hierbei kann es sich um einen für sich gesehen bekannten Drehzahlsensor handeln, der beispielsweise ein die Drehzahl der Kurbelwelle kennzeichnendes Signal an die Steuereinrichtung übermittelt.

Bei der erfindungsgemäß vorgesehenen Lastzuschaltung kann es sich grundsätzlich um jedwede Maßnahme handeln, die geeignet ist, die Bremswirkung, insbesondere das Bremsmoment des Antriebsstrangs zu erhöhen. Gemäß einer vorteilhaften Weiterbildung der Erfindung weist die zuschaltbare Last dabei eine mit steigender Motordrehzahl zunehmende Bremswirkung auf. Dies kann sich bereits aus dem Funktionsprinzip der Last selbst und/oder aus der Kopplung der Last an den Motor ergeben, beispielsweise wenn der Motor das Aggregat antreibt und sich daher mit einer Erhöhung der Motordrehzahl auch die Drehzahl des angetriebenen Aggregats erhöht. Das Aggregat erbringt dann eine höhere Leistung, welche vorteilhaft die auf den Antriebsstrang rückwirkende Bremsleistung erhöht.

In vorteilhafter Weise ist die Last einem vom Motor antreibbaren Aggregat wie insbesondere einem Kühler, Stromgenerator, Luftkompressor, Turboaggregat oder dergleichen zugeordnet, das geeignet ist, eine für den Betrieb des Fahrzeugs nutzbare Leistung zu erbringen. Dabei kann es sich im weitesten Sinne um jede Form der Nutzung handeln. Beispielsweise könnte von einem Stromgenerator abgegebene elektrische Leistung für unterschiedliche andere Aggregate direkt genutzt oder in Form elektrischer Energie für spätere Zwecke (beispielsweise: Motoranlassen, alternativer elektrischer Antrieb etc.) zwischengespeichert werden. Eine kraftstoffsparende Energierückgewinnung ließe sich so erzielen. Daneben könnten andere energieintensive Vorgänge durchgeführt werden, indem die zugeschaltete Last im Betreiben eines Luftkompressors zur Speicherung von später zu verwendender Druckluft oder eines Kühlers besteht.

Alternativ oder ergänzend kann die Last einem dem Antriebsstrang zuschaltbaren Widerstand, insbesondere einer Getriebedruckbremse, Abgasstaubremse (z.B. Stauklappenbremse), Dekompressionsbremse oder dergleichen zugeordnet sein. In diesem Fall erbringt die Last - neben deren Bremsleistung - keine für den Betrieb des Fahrzeugs nutzbare Leistung, sondern stellt bloß einen zusätzlich einsetzbaren Widerstand im Antriebsstrang dar, der Bewegungsenergie in Wärme oder ggf. andere Energieformen umwandelt.

Während es gemäß einer einfachen Ausführung des beanspruchten Fahrzeugs zunächst denkbar ist, dass die Steuereinrichtung die Last dem Antriebsstrang einfach zuschalten (d.h. Zuschaltung mit voller Wirkung) kann, sieht eine vorteilhaften Weiterbildung vor, dass die Last hinsichtlich deren Maßes der Zuschaltung zum Antriebsstrang veränderlich. Auf diese Weise lässt sich vorteilhaft eine dosierte Beaufschlagung des Antriebsstrangs mit der zusätzlichen Bremskraft der zugeschalteten Last erzielen. Abhängig von der technischen Gestaltung der jeweils zum Einsatz kommenden Last kann das Maß der Zuschaltung in Stufen oder sogar stufenlos veränderlich sein.

Gemäß einer vorteilhaften Weiterbildung des Fahrzeugs ist die Steuereinrichtung weiterhin betreibbar, dem Antriebsstrang mehrere Lasten zuzuschalten. Die auf den Antriebsstrang ausgeübte Bremswirkung kann so nochmals gesteigert werden, da sich die Lasten im zugeschalteten Zustand in deren Wirkung summieren. In diesem Zusammenhang kann vorgesehen sein, dass bei Überschreiten der vorgebbaren Motordrehzahl sämtliche verfügbare Lasten zugeschaltet werden. Durch ein zunächst geringes Maß der Zuschaltung der einzelnen Lasten könnte die Bremswirkung bei weiter steigender Motordrehzahl dosiert erhöht werden. Alternativ wäre es denkbar, bei Überschreiten der vorgebbaren Drehzahl zunächst nur eine Last zuzuschalten, wobei dann die Steuereinrichtung betreibbar wäre, bei Erreichen einer darüber liegenden weiteren vorgebbaren Motordrehzahl eine weitere Last zuzuschalten usw.. Demnach könnten mit steigender Motordrehzahl immer mehr Lasten zugeschaltet werden, um so die Bremswirkung bedarfsgerecht anzupassen. Die Steuereinrichtung ist dann betreibbar, die Zuschaltung der mehreren Lasten in Abhängigkeit der Motordrehzahl zu veranlassen.

Vorteilhaft ist die Steuereinrichtung betreibbar, das Maß der Zuschaltung der zumindest einen Last in Abhängigkeit eines Betriebsparameters zu verändern. Bei dem Betriebsparameter handelt es sich vorzugsweise um die Motordrehzahl. Es könnten auch andere Parameter wie beispielsweise Fahrgeschwindigkeit, Außentemperatur, Fahrzeugneigung (Gefälle) oder eine Kombination aus Parametern herangezogen werden, in deren Abhängigkeit die Steuereinrichtung das Maß der Zuschaltung verändert.

Gemäß einer bevorzugten Weiterbildung des Fahrzeugs beträgt das Maß der Zuschaltung der zumindest einen Last bei Betreiben des Motors unterhalb der vorgebbaren Motordrehzahl ein Mindestmaß, insbesondere null. Damit ist sichergestellt, dass in diesem Drehzahlbereich auf den Antriebsstrang keine die Antriebsleistung mindernde Bremswirkung ausgeübt wird bzw. dass diese auf ein konstruktiv bedingtes Mindestmaß beschränkt ist.

Auf weiterhin vorteilhafte Weise ist die Steuereinrichtung betreibbar, bei Überschreiten der vorgebbaren Motordrehzahl das Maß der Zuschaltung der zumindest einen Last mit zunehmender Motordrehzahl zu erhöhen. Durch eine Erhöhung der Zuschaltung mit zunehmender Motordrehzahl wird ein hinsichtlich des Fahrkomforts günstiger Übergang geschaffen zwischen einem reinen Motorbremsbetrieb (bis zur vorgebbaren Motordrehzahl) und einem Betrieb des Fahrzeugs mit zusätzlicher Bremskraftnutzung durch volle Lastzuschaltung.

Ein besonders hoher Fahrkomfort ergibt sich, wenn sich aufgrund entsprechender Ansteuerung das Maß der Zuschaltung mit zunehmender Motordrehzahl stetig, insbesondere stufenlos erhöht. Durch diese Maßnahme kann vorteilhaft eine progressive Steigerung der Bremswirkung des Antriebsstrangs erreicht werden, d.h. eine Steigerung, die stärker ausfällt als eine allein drehzahlverursachte Erhöhung der Bremswirkung.

Zweckmäßigerweise ist die Steuereinrichtung betreibbar, mit Erreichen einer vollständigen Zuschaltung der zumindest einen Last bei einer Motordrehzahl mit voller Zuschaltung, diese vollständige Zuschaltung für darüber liegende Motordrehzahlen beizubehalten.

Bei dem beanspruchten landwirtschaftliches Fahrzeug handelt es sich bevorzugt um einen Traktor. Da Traktoren häufig als Zugfahrzeuge schwerer Arbeitsgeräte eingesetzt werden, können im Schubbetrieb, d.h. bei Fahrt unter Nutzung der Bremswirkung des Antriebsstrangs beispielsweise im Gefälle, starke und langanhaltende Bremskräfte erforderlich sein. Daraus ergibt sich ein vorteilhafter Anwendungsfall. Daneben könnte die Erfindung auch an anderen landwirtschaftlichen Fahrzeugen wie einem Mähdrescher oder Feldhäcksler vorteilhafte Effekte erzielen.

Die Erfindung wird nachfolgend anhand eines durch zwei Figuren veranschaulichten Ausführungsbeispiels näher erläutert. In den Figuren zeigen:
- Fig. 1: einen Traktor in schematischer Seitenansicht,
- Fig. 2: ein Diagramm, welches Momentenverläufe in Abhängigkeit der Motordrehzahl wiedergibt.

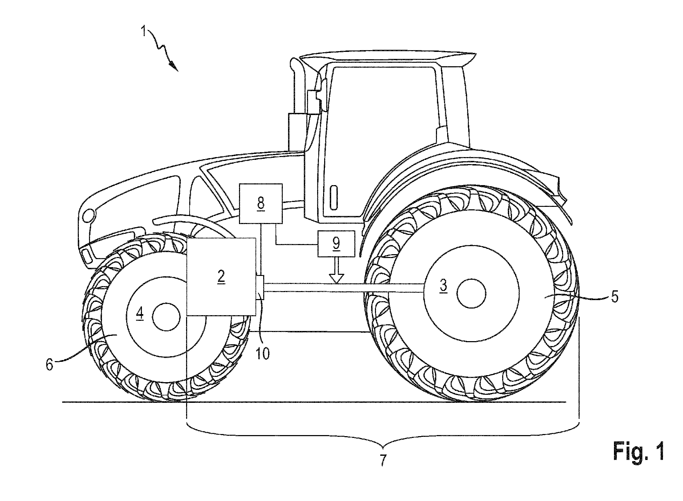

In Fig. 1 ist ein landwirtschaftliches Fahrzeug in Form eines Traktors 1 in vereinfachter schematischer Seitenansicht gezeigt. Der Traktor 1 weist an einer Vorderachse 4 befestigte Vorderräder 6 und an einer Hinterachse 3 befestigte Hinterräder 5 auf. Im gezeigten Ausführungsbeispiel ist die Hinterachse 3 von einem Motor 2 antreibbar (Hinterradantrieb), d.h. bildet eine antreibbare Fahrachse. Alternativ könnte die Vorderachse 4 vom Motor 2 antreibbar sein (Vorderradantrieb), oder es könnte die Vorderachse 4 ergänzend zur Hinterachse 3 vom Motor 2 antreibbar sein (Allradantrieb). Weiterhin könnte der Traktor alternativ zu den gezeigten Rädern 5, 6 andere Bodeneingriffsmittel aufweisen. Beispielsweise könnte zumindest eine der Fahrachsen mit einem Raupenfahrwerk versehen sein.

Bei dem Motor 2 handelt es sich beispielsweise um einen Verbrennungsmotor. Der Motor 2 bildet zusammen mit der Hinterachse 3 (mit daran befestigten Hinterrädern 5) einen Antriebsstrang 7, der dazu dient, vom Motor 2 erzeugtes Drehmoment auf die Hinterräder 5 zu übertragen und so den Traktor 1 (vorwärts oder rückwärts) über den Boden zu bewegen. Zur Übertragung der Antriebsleistung vom Motor 2 auf die Hinterachse 3 können unterschiedliche Maschinenelemente wie Kupplungen, Getriebe, Wellen und dergleichen zum Einsatz kommen, die auf für sich übliche Weise Teil eines Antriebsstrangs sind, die hier jedoch aus Gründen der Vereinfachung weder dargestellt noch näher erläutert sind.

An den Traktor 1 sind unterschiedliche Arbeitsgeräte anbaubar (nicht gezeigt), die im angebauten Zustand vom Traktor 1 mitbewegt werden. Fährt der Traktor 1 bei bestehender Verbindung des Antriebsstrangs 7 mit einer Geschwindigkeit über den Boden, so kann der Traktor 1 auf für sich gesehen zunächst bekannte Weise dadurch abgebremst werden, dass die Kraftstoffzufuhr zum Motor 2 gemindert oder vollständig unterbrochen wird, was beispielsweise durch "Gaswegnehmen" durch den Fahrer veranlasst wird. Aufgrund der Kopplung der Hinterachse 3 mit dem Motor 2 wird in diesem Fall die Bremswirkung des Motors ("Motorbremse") dazu genutzt, die Hinterräder 5 und damit den Traktor 1 zu bremsen.

Bei Talfahrt des Traktors 1, insbesondere mit zusätzlich angebautem schwerem Arbeitsgerät, kann es sein, dass die alleinige Bremswirkung des Motors 2 nicht ausreicht, um eine angestrebte Geschwindigkeit einzuhalten. Erfindungsgemäß ist der in Fig. 1 dargestellte Traktor 1 daher mit einer Steuereinrichtung 8 versehen, die betreibbar ist, bei Überschreiten einer vorgebbaren Motordrehzahl n_{z} dem Antriebsstrang 7 zumindest eine Last 9 zuzuschalten, um auf den Antriebsstrang 7 eine Bremswirkung auszuüben, die dann zusätzlich zur Bremswirkung des Motors 2 zum Bremsen beiträgt.

Zweck einer so realisierten Zuschaltung ist es, im Schubbetrieb eine selbsttätig erhöhte Bremswirkung im Antriebsstrang zu erreichen, so dass herkömmliche Radbremsen entweder nicht betätigt werden müssen oder zumindest entlastet werden. Durch die drehzahlausgelöste Zuschaltung wird der Fahrer von der Zuschaltung entlastet und kann sich auf den übrigen Arbeitsbetrieb konzentrieren.

Der Steuereinrichtung 8, die bevorzugt eine elektronische Recheneinheit umfasst, ist zu diesem Zweck ein Sensor 10 zugeordnet, der beispielsweise an der Kurbelwelle des Motors 2 angeordnet sein kann, um laufend die Motordrehzahl des Motors 2 zu erfassen. Auf Basis dieses Werts veranlasst die Steuereinrichtung 8 das Zuschalten (oder umgekehrt: Abschalten) zumindest einer Last 9 zum Antriebsstrang 7, wodurch eine drehzahlabhängige, selbsttätige Lastzuschaltung realisiert wird. Da eine zuschaltbare Last 9 prinzipiell von jeder technisch umsetzbaren Art einer zusätzlichen Bremsung des Antriebsstrangs 7 Gebrauch machen kann, ist die Last 9 in Fig. 1 verallgemeinert dargestellt, wobei der breite auf den Antriebsstrang 7 weisende Pfeil eine Einwirkung der Last 9 auf den Antriebsstrang 7 andeutet. Wie sich diese Einwirkung gestaltet, ist dabei bewusst offen gelassen.

Denkbar ist beispielsweise, dass die Last 9 einem vom Motor 2 antreibbaren Aggregat wie insbesondere einem Kühler, Stromgenerator, Luftkompressor, Turboaggregat oder dergleichen zugeordnet ist, das geeignet ist, eine für den Betrieb des Fahrzeugs 1 nutzbare Leistung zu erbringen. In diesen Fällen würde die Last 9 also durch ein zugeschaltetes, vom Motor 2 mit angetriebenes Aggregat gebildet.

Alternativ oder ergänzend könnte die Last 9 einem dem Antriebsstrang 7 zuschaltbaren Widerstand, insbesondere einer Getriebedruckbremse, Abgasstaubremse, Dekompressionsbremse oder dergleichen zugeordnet sein. Im Fall einer Abgasstaubremse (auch "Motorstaubremse") wird beispielsweise eine Klappe im Auspuff des Motors 2 geschlossen, wobei der dadurch erhöhte Abgasdruck den Motor 2 und damit den gesamten Antriebsstrang 7 abbremst. Vorteilhaft an einer Abgasstaubremse ist, dass sich beispielsweise durch Ventile ein Maß der Zuschaltung und damit die erzielbare Bremswirkung leicht steuern lässt. Auf ähnliche Weise könnte bei einem Turboaggregat eine veränderliche Lastzuschaltung erfolgen, wenn beispielsweise das Turboaggregat über eine veränderliche Geometrie verfügt.

Ganz allgemein ist demnach vorteilhaft vorgesehen, dass die Last 9 hinsichtlich deren Maßes der Zuschaltung zum Antriebsstrang 7 veränderlich ist.

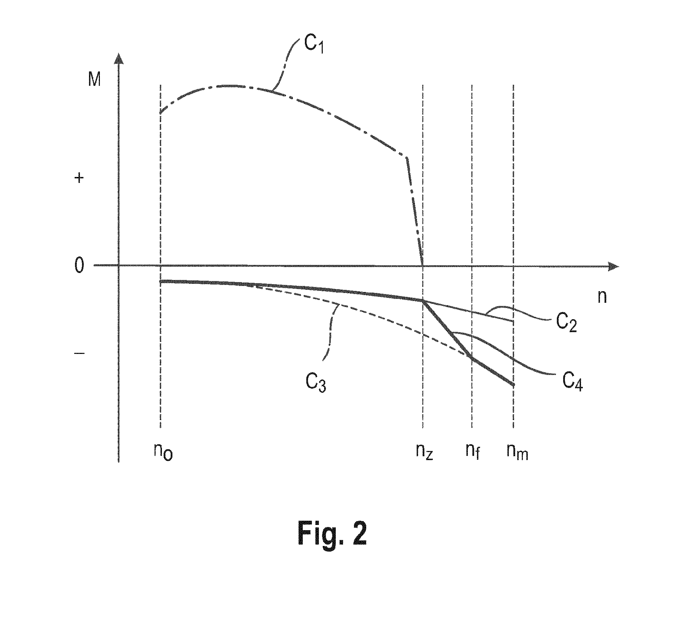

Eine vorteilhafte Anwendung einer drehzahlausgelösten, veränderlichen Lastzuschaltung im Schubbetrieb eines Traktors 1 gemäß Fig. 1 wird nachfolgend anhand von Fig. 2 erläutert. Dazu zeigt Fig. 2 in einem Diagramm verschiedene vereinfacht dargestellte Drehmomentverläufe in Abhängigkeit der Motordrehzahl n.

Dabei entspricht die Kurve:
- C₁: dem Verlauf des Motorantriebsmoments,
- C₂: dem Verlauf des Motorbremsmoments,
- C₃: dem Verlauf des Bremsmoments des Antriebsstrangs mit stets zugeschalteter Last,
- C₄: dem Verlauf des Bremsmoments des Antriebsstrangs mit drehzahlabhängig zugeschalteter, veränderlicher Last.

Gemäß der Kurve C₁ weist der Motor 2 des Traktors 1 einen für einen Dieselmotor typischen Verlauf des Antriebsmoments auf, wonach dieses oberhalb einer Leerlaufdrehzahl n₀ seinen Maximalwert erreicht und mit wachsender Motordrehzahl wieder abnimmt.

Im Schubbetrieb des Motors 2 weist der Motor 2 einen für einen Dieselmotor typischen Verlauf des Bremsmoments auf, wonach dieses mit steigender Motordrehzahl n stetig wächst (negative Werte, da dem Antriebsmoment entgegengesetzt).

Eine an dem Traktor 1 gemäß Fig. 1 erfindungsgemäß vorgesehene drehzahlabhängige Lastzuschaltung im Schubbetrieb wird durch die Kurve C₄ der Fig. 2 wiedergegeben. Die Kurve C₄ gibt wieder, dass das Bremsmoment des Antriebsstrangs 7 bis zum Erreichen einer Motordrehzahl n_{z} dem "natürlichen", d.h. lastfreien, Motorbremsmoment (wiedergegeben durch Kurve C₂) entspricht. Erst mit Überschreiten der Motordrehzahl n_{z} wird durch die Steuereinrichtung 8 dem Antriebsstrang 7 eine zusätzliche Last 9 zugeschaltet. Wie der Verlauf der Kurve C₄ wiedergibt, erfolgt die Zuschaltung jedoch nicht sofort in vollem Maße. Stattdessen bewirkt die Steuereinrichtung 8 eine dosierte Zuschaltung der Last 9 abhängig von der Motordrehzahl n.

Insbesondere bewirkt die Steuereinrichtung 8, dass bis zum Erreichen der Motordrehzahl n_{z} die Last 9 gar nicht zugeschaltet ist. Bei Überschreiten der Motordrehzahl n_{z} bewirkt die Steuereinrichtung 8, dass die Zuschaltung der Last 9 mit wachsender Motordrehzahl n erhöht wird. Wie der Kurve C₄ zu entnehmen, erhöht sich die Zuschaltung der Last 9 zwischen der Drehzahl n_{z} und einer darüber liegenden Drehzahl n_{f} von null auf eine volle Zuschaltung der Last 9. Die Erhöhung erfolgt stetig, so dass sich auch das Bremsmoment des Antriebsstrangs 7 mit wachsender Drehzahl n stetig erhöht.

Ab Erreichen der vollen Zuschaltung der Last 9 (bei Erreichen der Motordrehzahl n_{f}) wird diese vollständige Zuschaltung der Last 9 für darüber liegende Motordrehzahlen beibehalten.

**Bezugszeichenliste**

| | | | |
|---|---|---|---|
| 1 | Traktor | n | Motordrehzahl |
| 2 | Motor | n₀ | Leerlaufdrehzahl |
| 3 | Hinterachse | n_{Z} | Drehzahl für Zuschaltung |
| 4 | Vorderachse | n_{f} | Drehzahl für volle Zuschaltung |
| 5 | Hinterrad | nₘ | Maximale Drehzahl |
| 6 | Vorderrad | M | Drehmoment |
| 7 | Antriebsstrang | C₁ | Antriebsmoment Motor |
| 8 | Steuereinrichtung | C₂ | Bremsmoment Motor |
| 9 | Last | C₃ | Bremsmoment Antriebsstrang mit stets zugeschalteter Last |
| 10 | Drehzahlsensor | | |
| | | C₄ | Bremsmoment Antriebsstrang mit drehzahlabhängig zugeschalteter, veränderlicher Last |

## Patentansprüche

1. Landwirtschaftliches Fahrzeug (1), insbesondere Traktor, mit einem Motor (2) und mit zumindest einer Fahrachse (3, 4), die mit dem Motor (2) in Antriebsverbindung bringbar ist, um einen Antriebsstrang (7) zu bilden,
**gekennzeichnet durch** eine Steuereinrichtung (8), die betreibbar ist, bei Überschreiten einer vorgebbaren Motordrehzahl (n_{z}) dem Antriebsstrang (7) zumindest eine Last (9) zuzuschalten, um auf den Antriebsstrang (7) eine Bremswirkung auszuüben.

2. Landwirtschaftliches Fahrzeug nach Anspruch 1, **dadurch gekennzeichnet, dass** der Steuereinrichtung (8) ein Sensor (10) zur Erfassung der Motordrehzahl (n) zugeordnet ist.

3. Landwirtschaftliches Fahrzeug nach Anspruch 1 oder 2, **dadurch gekennzeichnet, dass** die Last (9) eine mit steigender Motordrehzahl (n) zunehmende Bremswirkung aufweist.

4. Landwirtschaftliches Fahrzeug nach einem der Ansprüche 1 bis 3, **dadurch gekennzeichnet, dass** die Last (9) einem vom Motor (2) antreibbaren Aggregat wie insbesondere einem Kühler, Getriebe, Stromgenerator, Luftkompressor, Turboaggregat oder dergleichen zugeordnet ist, das geeignet ist, eine für den Betrieb des Fahrzeugs (1) nutzbare Leistung zu erbringen.

5. Landwirtschaftliches Fahrzeug nach einem der Ansprüche 1 bis 4, **dadurch gekennzeichnet, dass** die Last (9) einem dem Antriebsstrang (7) zuschaltbaren Widerstand, insbesondere einer Getriebedruckbremse, Abgasstaubremse, Dekompressionsbremse oder dergleichen zugeordnet ist.

6. Landwirtschaftliches Fahrzeug nach einem der Ansprüche 1 bis 5, **dadurch gekennzeichnet, dass** die Last (9) hinsichtlich deren Maßes der Zuschaltung zum Antriebsstrang (7) veränderlich ist.

7. Landwirtschaftliches Fahrzeug nach einem der Ansprüche 1 bis 6, **dadurch gekennzeichnet, dass** die Steuereinrichtung (8) betreibbar ist, dem Antriebsstrang (7) mehrere Lasten (9) zuzuschalten.

8. Landwirtschaftliches Fahrzeug nach Anspruch 6 oder 7, **dadurch gekennzeichnet, dass** die Steuereinrichtung (8) betreibbar ist, das Maß der Zuschaltung der zumindest einen Last (9) in Abhängigkeit eines Betriebsparameters (n) zu verändern.

9. Landwirtschaftliches Fahrzeug nach Anspruch 8, **dadurch gekennzeichnet, dass** das Maß der Zuschaltung der zumindest einen Last (9) bei Betreiben des Motors (2) bis zum Erreichen der vorgebbaren Motordrehzahl (n_{z}) ein Mindestmaß, insbesondere null beträgt.

10. Landwirtschaftliches Fahrzeug nach Anspruch 8 oder 9, **dadurch gekennzeichnet, dass** die Steuereinrichtung (8) betreibbar ist, bei Überschreiten der vorgebbaren Motordrehzahl (n_{z}) das Maß der Zuschaltung der zumindest einen Last (9) mit zunehmender Motordrehzahl (n) zu erhöhen.

11. Landwirtschaftliches Fahrzeug nach Anspruch 10, **dadurch gekennzeichnet, dass** sich das Maß der Zuschaltung mit zunehmender Motordrehzahl (n) stetig erhöht.

12. Landwirtschaftliches Fahrzeug nach einem der Ansprüche 8 bis 11, **dadurch gekennzeichnet, dass** die Steuereinrichtung (8) betreibbar ist, mit Erreichen einer vollständigen Zuschaltung der zumindest einen Last (9) bei einer Motordrehzahl mit voller Zuschaltung (n_{f}), diese vollständige Zuschaltung für darüber liegende Motordrehzahlen (n) beizubehalten.
